(19) **Europäisches Patentamt European Patent Office Office européen des brevets**

(11) **EP 2 334 048 B1**

(12) **EUROPEAN PATENT SPECIFICATION**

(45) Date of publication and mention of the grant of the patent:
**20.06.2018 Bulletin 2018/25**

(51) Int Cl.:
*H04N 1/48* (2006.01)     *G07D 11/00* (2006.01)
*G07D 7/12* (2016.01)

(21) Application number: **10192489.2**

(22) Date of filing: **25.11.2010**

(54) **Reflected image reading unit**

Einheit zum Lesen reflektierter Bilder

Unité de lecture d'images reflétée

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.12.2009 JP 2009274209**

(43) Date of publication of application:
**15.06.2011 Bulletin 2011/24**

(73) Proprietor: **Hitachi-Omron Terminal Solutions, Corporation
Tokyo 141-8576 (JP)**

(72) Inventors:
• **Yamamoto, Yusuke
Chiyoda-ku, Tokyo 100-8220 (JP)**

• **Hayashi, Yasutoshi
Chiyoda-ku, Tokyo 100-8220 (JP)**
• **Kawaguchi, Ryota
Chiyoda-ku, Tokyo 100-8220 (JP)**

(74) Representative: **MERH-IP Matias Erny Reichl Hoffmann
Patentanwälte PartG mbB
Paul-Heyse-Strasse 29
80336 München (DE)**

(56) References cited:
**EP-A1- 1 818 876      EP-A1- 1 826 729
US-A1- 2008 239 747   US-A1- 2009 116 080**

**Description**

BACKGROUND OF THE INVENTION

The present invention relates to a reflected image reading unit which irradiates an object to be read with illumination light to detect reflected light therefrom and reads a reflected image of the object to be read.

Heretofore, the financial institution such as bank installs an automatic teller machine (hereinafter abbreviated to ATM) which processes various transactions such as receipt and payment transactions of money in response to user's input operation in a store or the like. The ATM includes a bill processing device provided with a bill distinguishing unit for distinguishing genuineness and denominations of bills (banknotes) concerning receipt and payment transactions of money as is generally known. The bill processing device includes a bill conveying path connecting denomination-classified (per-denomination) cartridges and money receiving and paying ports and conveys bills along the bill conveying path. The bill distinguishing unit reads images of bills being conveyed along the bill conveying path and distinguishes kinds or denominations and genuineness of bills.

The bill distinguishing unit distinguishes kinds and genuineness of bills synthetically or comprehensively on the basis of not only the above image but also magnetic pattern read from the bill, thickness detected of bill and the like.

A device for reading reflected image of bill being conveyed along the conveying path is described in JP-A-2009-118142 (patent document 1), for example. The device described in the patent document 1 includes an illumination part for irradiating bills with illumination light and a detection part for detecting light reflected by bills, both of which are disposed above the conveying path. The illumination part includes light emitting members disposed at both ends of a light leading member extending in width direction (hereinafter referred to as main scanning direction) of the conveying path. The illumination part turns on or lights up the light emitting members to thereby irradiate bills with line-shaped illumination light in the main scanning direction. The detection part includes light receiving elements such as CCD. The detection part detects light reflected by the bills to read images for one line in the main scanning direction irradiated with illumination light. The detection part reads image for one line in the main scanning direction each time bill is conveyed by predetermined distance and gets reflected image of bill by linking or combining the read images together.

In the above device for reading reflected image, the light emission amount of the light emitting members and the sensitivity of the light receiving elements are varied due to aging and the like. The reading accuracy of the reflected image is varied due to variation of the light emission amount of the light emitting members and the sensitivity of the light receiving elements. A general device includes the structure for keep the reading accuracy of the reflected image constant.

For example, the patent document 1 discloses that a brightness adjustment reference member disposed at a position opposite to the light leading member is used to alternately turn on the light emitting members at both ends of the light leading member and detect reflected light. An amount of detected reflected light is compared with stored reference amount of light for each of the light emitting members so that the light emission amount of each light emitting member is corrected.

US 2009/0116080 A1 discloses an image reading apparatus including a plurality of LEDs and an LED control circuit which puts on each LED individually and modulates each LED by correcting the output based on modulated light image data when each of the LEDs is turned on and reference light quantities based on target outputs corresponding to each of the LEDs.

SUMMARY OF THE INVENTION

However, the patent document 1 describes the structure that the light emitting members at both ends of the light leading member are turned on alternately to detect reflected light at this time. That is, it is necessary to detect the reflected light in two different states. Accordingly, there is a problem that it takes a long time to correct the light emission amount. Particularly, when the ATM processes transactions (receipt and payment transactions of money and the like) of the kind accompanied by identification of bills, the ATM performs the above correction in advance of the transaction processing. Accordingly, when it takes a long time to perform the above correction, it also takes a long time to perform the transaction processing and there arises a problem that the customer service is reduced.

It is an object of the present invention to provide a reflected image reading unit which reduces the time required for the processing of correcting variation of reading accuracy of reflected image caused by deterioration of light emitting members and light receiving elements such as aging and the like.

In order to solve the above problems and achieve the above object, the reflected image reading unit according to the present invention is structured as follows.

An illumination part and a light receiving part are disposed on one side opposite to an object to be read being conveyed along a conveying path. The illumination part irradiates the object being conveyed with illumination light in the form of line in width direction (in main scanning direction) of the object. The light receiving part includes a plurality of light receiving elements arranged in width direction of the object being conveyed to detect light reflected by the object by the plurality of light receiving elements.

The illumination part includes a light leading member extending in main scanning direction and light emitting members disposed at both ends of the light leading member to make light enter the light leading member. Reflecting plates are disposed in positions opposite to both ends of the light leading member. A memory part stores therein a first reference pattern of light amount distribution of the line-shaped illumination light emitted by the light leading member in a first state that the light emitting member disposed at one end of the light leading member is turned on and the light emitting member disposed at the other end thereof is turned off and a second reference pattern of light amount distribution of the line-shaped illumination light emitted by the light leading member in a second state that the light emitting member disposed at one end of the light leading member is turned off and the light emitting member disposed at the other end thereof is turned on. The first reference pattern may be light amount distribution of the line-shaped illumination light in the first state or may be amount of reflected light from each reflecting plate detected by the light receiving part in the first state. Similarly, the second reference pattern may be light amount distribution of the line-shaped illumination light in the second state or may be amount of reflected light from each reflecting plate detected by the light receiving part in the second state.

A correction coefficient calculation part detects reflected light of each of the reflecting plates disposed in opposing relationship with both ends of the light leading member in a third state that the light emitting members disposed at both ends of the light leading member are both turned on by the light receiving part and calculates correction coefficient used in reading of reflected image of the object on the basis of amount of reflected light detected for each of the reflecting plates and the first and second reference patterns stored in the memory part.

As described above, the reflected light from each reflecting plate is detected in the third state that the light emitting members disposed at both ends of the light leading member are both turned on to thereby correct variation in reading accuracy of reflected image due to degradation of two light emitting members. Accordingly, the processing time for correction can be shortened.

According to the present invention, the time required for processing of correcting variation in reading accuracy of reflected image due to degradation of the light emitting members and the light receiving elements caused by aging and the like can be shortened.

Other objects, features and advantages of the invention will become apparent from the following description of the embodiments of the invention taken in conjunction with the accompanying drawings.

BRIEF DESCRIPTION OF THE DRAWINGS

Fig. 1 is a schematic diagram illustrating the external appearance of an ATM;
Fig. 2 is a block diagram schematically illustrating main part of the ATM;
Fig. 3 is a schematic diagram illustrating internal configuration of a bill processing unit;
Fig. 4 is a block diagram schematically illustrating main part of the bill distinguishing unit;
Fig. 5 is a diagram explaining arrangement of a light emitting part and a light receiving part;
Fig. 6 is a diagram explaining arrangement of a light emitting part and a light receiving part;
Fig. 7 is a graph showing an initial light amount distribution pattern L0(X);
Fig. 8 is a graph showing an initial light amount distribution pattern R0(X);
Fig. 9 is a graph showing an initial light amount distribution pattern LR0(X);
Fig. 10 is a graph showing a light amount distribution pattern L(X);
Fig. 11 is a graph showing a light amount distribution pattern R(X); and
Fig. 12 is a flow chart showing correction processing.

DESCRIPTION OF THE EMBODIEMNTS

An automatic teller machine (hereinafter abbreviated to ATM) to which a reflected image reading unit according to an embodiment of the present invention is applied is now described.

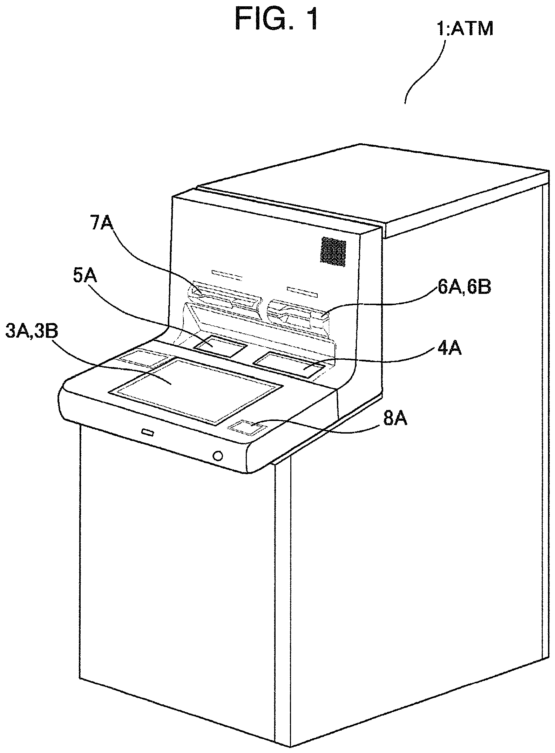

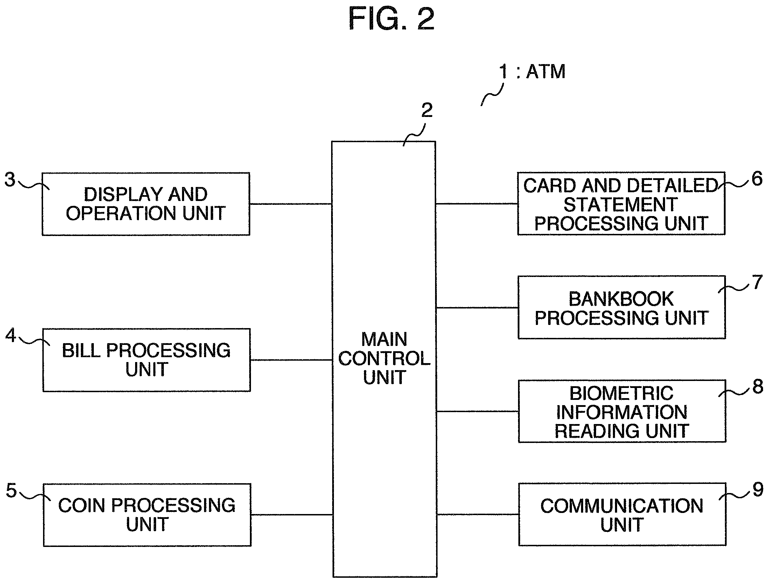

Fig. 1 is a schematic diagram illustrating the external appearance of the ATM and Fig. 2 is a block diagram schematically illustrating main part of the ATM. The ATM 1 is installed in store of financial institution, convenience store or the like. The ATM 1 processes various transactions such as receipt and payment transactions of money in response to user's input operation. The ATM 1 includes a main control unit 2, a display and operation unit 3, a bill processing unit 4, a coin processing unit 5, a card and detailed statement processing unit 6, a bankbook processing unit 7, a biometric information reading unit 8 and a communication unit 9. The main control unit 2 controls operation of respective units or parts in the body of ATM 1 and processes transactions required by user.

The display and operation unit 3 includes a display device 3A disposed in the front of the body and a touch screen or touch panel 3B affixed on a picture screen of the display device 3A. The display and operation unit 3 displays an operation guidance picture for user on the display device 3A. The display and operation unit 3 detects depressed position on the touch panel 3B to thereby detect user's input operation concerning personal identification number and transaction contents (kind of transaction, amount of money to be received and paid and the like).

The bill processing unit 4 processes bills for money to be received and paid. A bill receiving and paying port 4A for receiving bills for money to be received and paid is provided in the front of the body. A shutter is provided in the bill receiving and paying port 4A. The bill receiving and paying port 4A is provided with partition plates for partitioning places for receiving bills for money to be received and paid and bills to be returned. The bill processing unit 4 opens and closes the shutter to restrict insertion and extraction of bills to the bill receiving and paying port 4A. Detailed configuration of the bill processing unit 4 is described later.

The coin processing unit 5 conveys coins along a coin conveying path formed between a coin receiving and paying port 5A disposed in the front of the body and coin cartridges provided in the body. Further, the coin processing unit 5 includes a coin distinguishing part for distinguishing denominations and genuineness for each bill being conveyed along the coin conveying path.

The card and detailed statement processing unit 6 performs taking in of a cash card (hereinafter merely referred to as a card) inserted into a card insertion port 6A disposed in the front of the body, reading of card information (financial institution number, store number, account number and the like) recorded in magnetic stripe of the card, rewriting of card information and the like. Further, when the inserted card is an IC card, the card and detailed statement processing unit 6 also performs reading and rewriting of data recorded in an IC chip of the card. The IC chip stores therein biometric information (registered information) and the like of the user who is an owner of the card. Moreover, the card and detailed statement processing unit 6 includes a printing part (not shown) for printing transaction contents on detailed statement. The card and detailed statement processing unit 6 discharges the detailed statement on which transaction contents are printed to a statement discharge port 6B disposed in the front of the body.

The bankbook processing unit 7 includes a printing part (not shown) for taking in a bankbook inserted in a bankbook insertion port 7A disposed in the front of the body and printing transaction history on the bankbook. Further, the bankbook processing unit 7 includes a page turning mechanism for turning the pages of the bankbook taken in, a bar-code reader for reading bar code indicating page number printed on the bankbook, a magnetic head for reading bankbook information (financial institution number, store number, account number and the like) recorded in magnetic stripe affixed on the bankbook and the like.

The biometric information reading unit 8 includes a biometric information reading sensor 8A disposed in the front of the body. The biometric information reading sensor 8A reads a finger vein pattern of user. In the embodiment, the sensor for reading finger vein pattern is used as the biometric information reading sensor 8A by way of example, although any sensor for reading biometric information of other kinds such as palm vein, iris and retina may be used. The biometric information reading unit 8 collates biometric information (read information) of user read by the biometric information reading sensor 8A with biometric information (registered information) recorded in IC chip of card and authenticates whether the user is the same person as the owner of card or not on the basis of the degree of similarity therebetween. The communication unit 9 controls communication with host apparatus (not shown) of the financial institution through network.

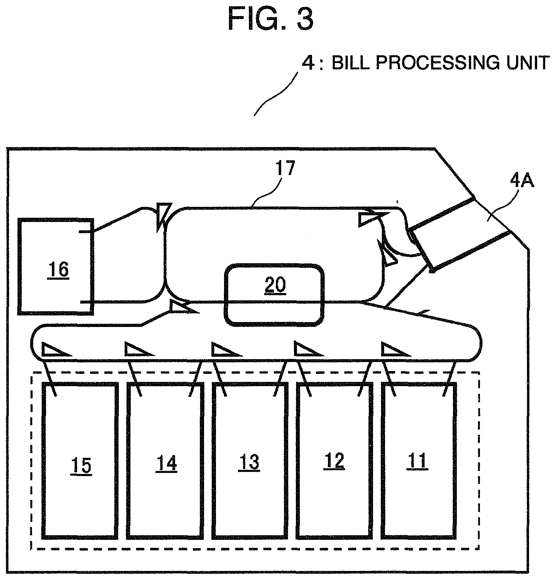

The configuration of the bill processing unit 4 is now described. Fig. 3 is a schematic diagram illustrating the internal configuration of the bill processing unit. The bill processing unit 4 includes denomination-classified cartridges 11 to 14 and a withdrawal cartridge 15. The denomination-classified (per-denomination) cartridges 11 to 14 and the withdrawal cartridge 15 are detachably mounted in the body. The denomination-classified cartridges 11 and 12 receives 10,000 yen bills. The denomination-classified cartridge 13 receives 1000 yen bills. The denomination-classified cartridge 14 receives 2,000 yen bills and 5,000 yen bills. The withdrawal cartridge 15 receives bills judged that the bills cannot be used for transaction. The bills (2,000 yen bills and 5,000 yen bills) received in the denomination-classified cartridge 14 and the bills received in the withdrawal cartridge 14 are not used as bills for money to be paid. Accordingly, the denomination-classified cartridge 14 and the withdrawal cartridge 15 may not include a mechanism for sending out bills.

Moreover, the bill processing unit 4 includes a temporarily holding part 16 which temporarily receives bills for money received and holds the bills. The bill processing unit 4 includes a bill conveying path 17 connecting the bill receiving and paying port 4A, the denomination-classified cartridges 11 to 14, the withdrawal cartridge 15 and the temporarily holding part 16. The bill processing unit 4 includes a bill conveying part (not shown) for conveying bills along the bill conveying path 17. Further, the bill conveying part controls flappers disposed at branch points of the bill conveying path 17 to control conveyance destination of bills being conveyed. The bill processing unit 4 includes a bill distinguishing unit 20 for distinguishing denominations and genuineness of bills being conveyed along the bill conveying path 17. The bill distinguishing unit 20 distinguishes denominations and genuineness of each of bills being conveyed along the bill conveying path 17.

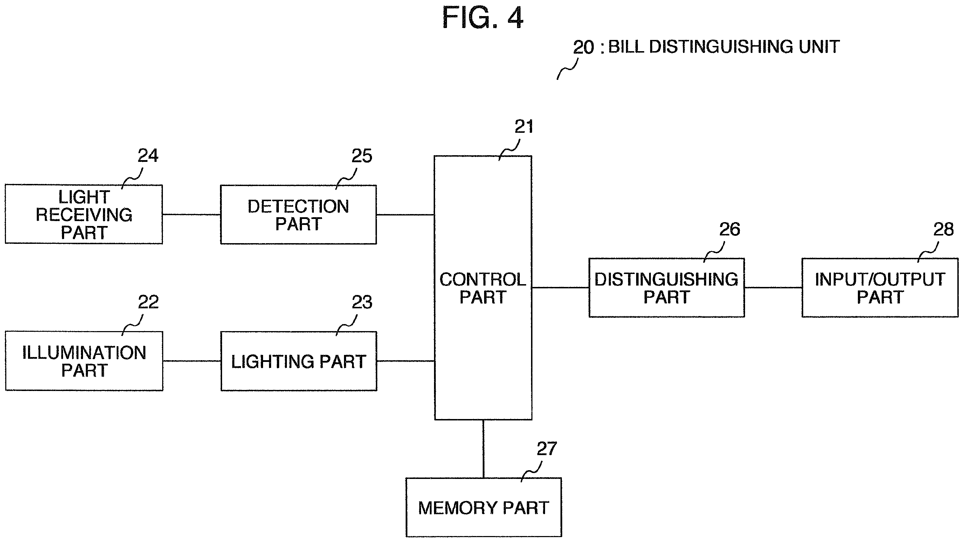

Fig. 4 is a block diagram schematically illustrating main part of the bill distinguishing unit. The bill distinguishing unit 20 includes a control part 21, an illumination part 22, a lighting part 23, a light receiving part 24, a detection part 25, a distinguishing part 26, a memory part 27 and an input/output part 28. The bill distinguishing unit 20 reads reflected images of bills and distinguishes denominations and genuineness of bills on the reflected images. The control part 21 controls operation of respective parts of the bill distinguishing unit 20.

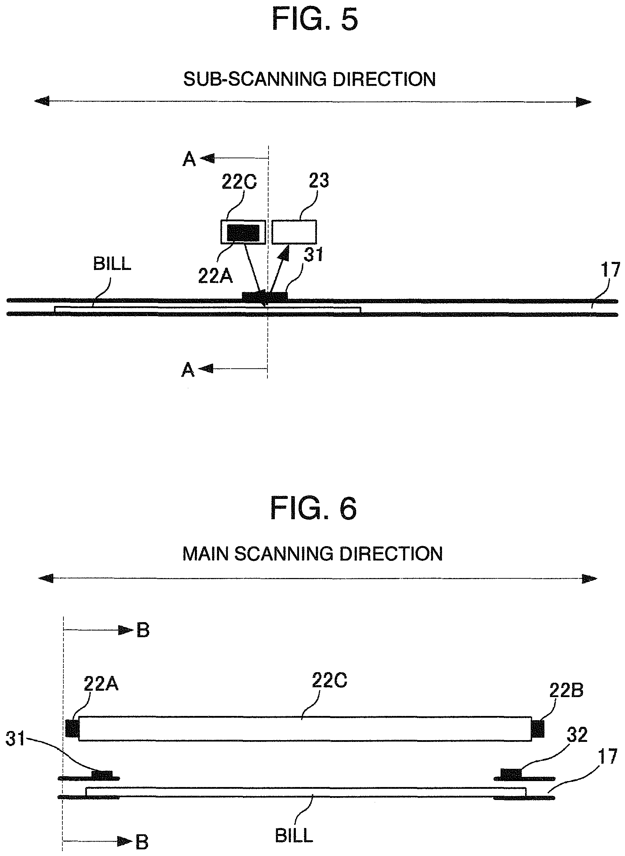

Figs. 5 and 6 are diagrams explaining arrangement of light emitting part and light receiving part. Fig. 5 is a diagram as viewed in the direction of arrows B-B shown in Fig. 6. Fig. 6 is a diagram as viewed in the direction of arrows A-A shown in Fig. 5. The right and left direction in Fig. 5 is sub-scanning direction which is conveying direction of bills. The right and left direction in Fig. 6 is main scanning direction which is width direction of the bill conveying path 17.

The illumination part 22 includes a light leading member 22C extending in the main scanning direction and light emitting members 22A and 22B disposed at both ends of the light leading member 22C. The illumination part 22 emits light in the form of line extending in the main scanning direction. The illumination part 22 emits light to enter the light leading member 22C by lighting the light emitting members 22A and 22B. The light leading member 22C emits light entered therein from the side opposite to the bill conveying path 17 so as to irradiate bills being conveyed on the bill conveying path 17 with illumination light efficiently. For example, the light leading member 22C includes reflective film coating applied on the side (excluding the end surfaces which light of the light emitting members 22A and 22B enters) which is not opposite to the bill conveying path 17 so as to limit discharge of light entered by the light emitting members 22A and 22B from the side which is not opposite to the bill conveying path 17. The lighting part 23 controls turning on and off of the light emitting members 22A and 22B of the illumination part 22 individually. Furthermore, the lighting part 23 controls currents flowing through the light emitting members 22A and 22B individually and also controls an amount of light emitted at the time of lighting individually.

The light receiving part 24 is a line sensor composed of a plurality of light receiving elements. The plurality of light receiving elements are arranged in the main scanning direction. The detection part 25 detects output of the light receiving elements to thereby read reflected image for one line in the main scanning direction of bill. The detection part 25 links or combines one-line reflected images read repeatedly in the main scanning direction each time bills is conveyed by predetermined distance in the sub-scanning direction to produce reflected image for one bill.

The bill distinguishing unit 20 includes reflecting plates 31 and 32 disposed at both ends of the bill conveying path 17. The reflecting plates 31 and 32 are disposed in positions irradiated with illumination light of the illumination part 22. Further, the reflecting plates 31 and 32 are disposed on the same side of the bill conveying path 17 as the illumination part 22 and the light receiving part 24. Accordingly, the illumination part 22 can irradiate the reflecting plates 31 and 32 with illumination light regardless of presence of bill in the bill convey path 17 and light by reflected by the reflecting plates 31 and 32 can be detected by the light receiving part 24.

The distinguishing part 26 distinguishes denominations and genuineness of bill on the basis of reflected image of the bill obtained by the detection part 25. The memory part 27 stores therein parameters and the like used for operation control of the bill distinguishing unit 20. The input/output part informs distinguished result in the distinguishing part 26 to the bill processing unit 4. The bill processing unit 4 decides conveyance destination of the bill in accordance with the distinguished result notified from the bill distinguishing unit 20.

General operation of the ATM 1 according to the embodiment is now described in brief. Description is made by taking processing procedure of receipt and payment transactions of money in the ATM 1 as an example.

In the receipt transaction of money, the ATM 1 sends out bills received in the bill receiving and paying port 4A onto the bill conveying path 17 one by one and distinguishes denominations and genuineness of the bills in the bill distinguishing unit 20. The bill processing unit 4 conveys the received bill of which denomination and genuineness are distinguished to the temporarily holding part 16 and holds it therein. On the other hand, the bill processing unit 4 returns the bill of which at least one of denomination and genuineness cannot be distinguished to the bill receiving and paying port 4A to be returned to user. When an amount of money received from user is decided, the ATM 1 performs receipt transaction of money in which the decided amount of money received is entered in user's account (designated account). This receipt transaction of money is processing of informing user's account number and amount of money received to a host apparatus. Further, the card and detailed statement processing unit 6 performs issue of detailed statement on which transaction contents are printed and printing of transaction contents on the bankbook received this time by the bankbook processing unit.

Then, the bill processing unit 4 sends out the bills held in the temporarily holding part 16 one by one and distinguishes denominations and genuineness thereof in the bill distinguishing unit 20 again. The bill processing unit 4 conveys each bill to the cartridge for the denomination distinguished for each bill to be received therein. The bill processing unit 4 conveys the bill of which at least one of denomination and genuineness cannot be distinguished to the withdrawal cartridge 15 to be received therein.

In the payment transaction of money, the ATM 1 decides the number of bills to be paid for each of the denominations of bills in accordance with the designated amount of money to be paid. The bill processing unit 4 sends out the decided number of bills from the denomination-classified (per-denomination) cartridges 11 to 13 for each denomination and distinguishes denominations and genuineness thereof in the bill distinguishing unit 20. The bill processing unit 4 conveys the bills of which denominations and genuineness can be distinguished to the bill receiving and paying port 4A to be received therein. On the other hand, the bill processing unit conveys the bills of which at least one of denominations and genuineness cannot be distinguished to the withdrawal cartridge 15 to be received therein. Moreover, each time the bill is received in the withdrawal cartridge 15, one bill is sent out newly from the denomination-classified cartridges 11 to 13 from which the bill was sent out.

When the ATM 1 receives bills corresponding to the amount of money to be paid in the bill receiving and paying port 4A, the ATM 1 performs processing for paying the amount of money to be paid from user's account (designated account). The paying processing is processing for informing user's account number and the amount of money to be paid to host apparatus. The ATM 1 opens shutter disposed in the bill receiving and paying port 4A and discharges bills received within the bill receiving and paying port 4A to user. Further, the card and detailed statement processing unit 6 performs issue of detailed statement on which transaction contents are printed and printing of transaction contents on the bankbook received this time by the bankbook processing unit 7.

The bill distinguishing unit 20 distinguishes denominations and genuineness of bills using reflected image of bills. Although description is not made here, the bill distinguishing unit 20 detects magnetic pattern, thickness and the like of bills and synthetically or comprehensively distinguishes denominations and genuineness of bills.

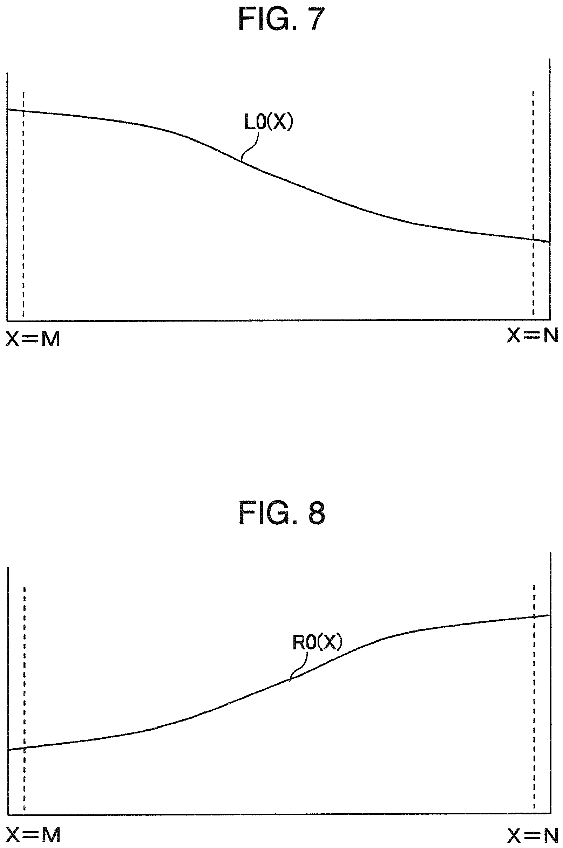

The processing for correcting variation of reading accuracy of reflected image due to aging and the like of the light emitting members 22A and 22B and the light receiving elements of the light receiving part 24 by the bill distinguishing unit 20 is now described. The bill distinguishing unit 20 stores therein initial light amount distribution patterns L0(X) and R0(X) shown in Figs. 7 and 8. The initial light amount distribution pattern L0(X) shown in Fig. 7 is output of light receiving elements included in the light receiving part 24 and arranged in the main scanning direction when the reflecting plates for reference are put on the bill conveying path 17 in the state that the light emitting member 22A is turned on and the light emitting member 22B is turned off (first state described in the present invention). The initial light amount distribution pattern R0(X) shown in Fig. 8 is output of light receiving elements included in the light receiving part 24 and arranged in the main scanning direction when the reflecting plates for reference are put on the bill conveying path 17 in the state that the light emitting member 22A is turned off and the light emitting member 22B is turned on (second state described in the present invention).

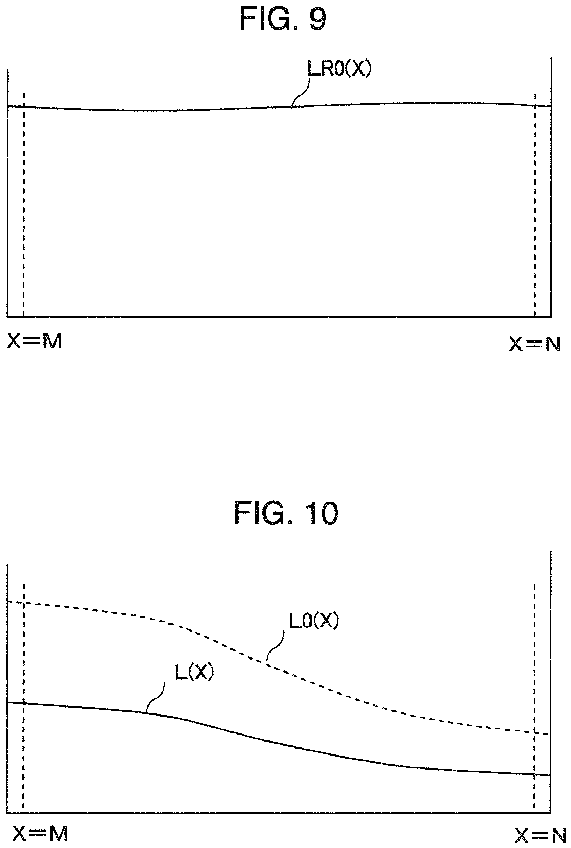

Variable X in the initial light amount distribution patterns L0(X) and R0(X) represents the light receiving element arranged in the main scanning direction. X=M represents the light receiving element disposed in the position where reflected light from the reflecting plate 31 is received and X=N represents the light receiving element disposed in the position where reflected light from the reflecting plate 32 is received. Currents supplied to the light emitting members 22A and 22B are individually defined so that the initial light amount distribution patterns L0(X) and R0(X) are combined to get LR0(X) having substantially uniform light amount distribution in the main scanning direction with light amount proper to read reflected image of bill as shown in Fig. 9 when both of the light emitting members 22A and 22B are turned on. Usually, LR0(X) is substantially equal to the sum of L0(X) and R0(X).

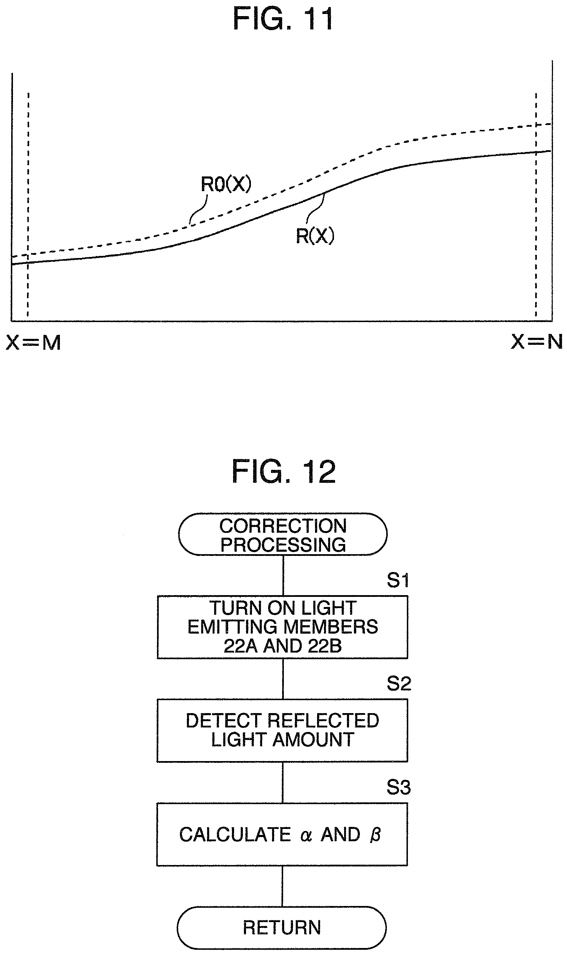

The light emission amount of the light emitting members 22A and 22B to supplied current is reduced due to aging and the like. For example, the light amount distribution pattern L(X) obtained when the light emitting member 22A is turned on and the light emitting member 22B is turned off is varied to distribution shown in Fig. 10 due to aging and the like of the light emitting member 22A. The light amount distribution pattern R(X) obtained when the light emitting member 22A is turned off and the light emitting member 22B is turned on is varied to distribution shown in Fig. 11 due to aging and the like of the light emitting member 22B.

Variation of the light amount distribution patterns shown in Figs. 10 and 11 contains not only aging of the light emitting members 22A and 22B but also aging and the like of the light receiving part 24.

Generally, the degree of reduction in light amount of the light emitting member 22A is not the same as that of the light emitting member 22B.

Fig. 12 is a flow chart showing correction processing. This correction processing is performed in advance of distinguishing of bills when transaction of handling bills such as receipt and payment transactions of money is processed. The correction processing is processing for making the light amount distribution of line-shaped illumination light emitted in the main scanning direction by the illumination part 22 equal to the initial light amount distribution LR0(X) shown in Fig. 9.

The bill distinguishing unit 20 turns on both of light emitting members 22A and 22B and detects the reflected light amounts of the reflecting plates 31 and 32 (S1). In step S1, a current value supplied to the light emitting member 22A is a current value supplied when the initial light amount distribution pattern L0(X) is obtained. Further, a current value supplied to the light emitting member 22B is a current value supplied when the initial light amount distribution pattern R0(X) is obtained.

When the degree of degradation of the light emitting member 22A at this time is $\alpha$ and the degree of degradation of the light emitting member 22B is $\beta$, the light amount distribution patterns L(X) and R(X) can be closely resembled by the following expressions:

$$L(X) = \alpha \times L0(X)$$

$$R(X) = \beta \times R0(X)$$

Further, the reflected light amount LR(M) from the reflecting plate 31 obtained in step S1 is expressed by the following expression:

$$LR(M) = \alpha \times L0(M) + \beta \times R0(M)$$

Further, the reflected light amount LR(N) from the reflecting plate 32 obtained in step S1 is expressed by the following expression:

$$LR(N) = \alpha \times L0(N) + \beta \times R0(N)$$

As described above, the bill distinguishing unit 20 stores in the memory 27 the initial light amount distribution patterns L0(X) and R0(X). Accordingly, when the initial light amount distribution pattern LRO(X) is as follows:

$$LR0(X) = L0(X) + R0(X)$$

LR0(M) becomes as follows:

$$LR0(M) = L0(M) + R0(M)$$

and LR0(N) becomes as follows:

$$LR0(N) = L0(N) + R0(N)$$

The bill distinguishing unit 20 calculates $\alpha$ and $\beta$ using the reflected light amount LR(M) from the reflecting plate 31 detected in step S1 and the reflected light amount LR(N) from the reflecting plate 32 (S2). In step S2, first-degree simultaneous equations in two unknowns expressed by the following equations are solved to calculate $\alpha$ and $\beta$.

$$LR(M) = \alpha L0(M) + \beta \times R0(M)$$

$$LR(N) = \alpha L0(N) + \beta \times R0(N)$$

The bill distinguishing unit 20 decides the current value supplied to the light emitting member 22A in accordance with $\alpha$ calculated in step S2 and decides the current value supplied to the light emitting member 22B in accordance with $\beta$ calculated in step S2 (S3).
The lighting part 23 sets the currents supplied to the light emitting members 22A and 22B to the current values decided in step S3.
Thus, the light amount distribution LR(X) of line-shaped illumination light with which the illumination part 22 irradiates the bills being conveyed along the bill conveying path can be made to be substantially equal to the light amount distribution LRO(X) at the time of the initial setting. That is, the line-shaped illumination light with which bills are irradiated can be corrected to proper light amount distribution (light amount distribution LRO(X) at the time of initial setting) without influence by reduction of the light emission amount due to aging and the like of the light emitting members 22A and 22B. Accordingly, reduction of the distinguishing accuracy for denominations and genuineness of bills can be suppressed.
Moreover, since variation of the reading accuracy of the reflected image due to degradation of the light emitting members 22A and 22B can be corrected by LR(M) and LR(N) detected in the state that both of the light emitting members 22A and 22B are turned on, the processing time for correction can be shortened.
As apparent from the foregoing description, by storing at least four reflected light amounts L0(M), L0(N), R0(M) and R0(N) in the memory part 27, the above correction processing can be performed.
In the foregoing description, the lighting part 23 changes currents supplied to the light emitting members 22A and 22B in accordance with $\alpha$ and $\beta$ calculated in step S2, although an amplification factor for amplifying by the detection part 25 outputs of the light receiving elements of the light receiving part 24 may be changed. Further, the amplification factor can be set for each of the light receiving elements. Concretely, the output of each light receiving element is estimated by comparison of initial light amount distribution pattern LRO(X) and current light amount distribution pattern LR(X) estimated from $\alpha$ and $\beta$ calculated in step S2. The amplification factor may be changed on the basis of the ratio of output of each light receiving element at initial light amount distribution pattern LRO(X) and output of each light receiving element at current light amount distribution pattern LR(X). In this case, the configuration for adjusting light emission amounts of the light emitting members 22A and 22b can be eliminated and it can cope with even rough adjustment.
Further, the present invention can be applied to not only the above bill distinguishing unit 20 but also any apparatus as far as the apparatus can read reflected image of paper such as check, securities and manuscript.
It should be further understood by those skilled in the art that although the foregoing description has been made on embodiments of the invention, the invention is not limited thereto and various changes and modifications may be made without departing from the scope of the appended claims.

**Claims**

1. A reflected image reading unit including an illumination part (22) and a light receiving part (24) disposed on one side opposite to an object to be read being conveyed along a conveying path (17),
the illumination part (22) irradiating the object being conveyed with illumination light in form of line in width direction of the object,

the light receiving part (24) including a plurality of light receiving elements arranged in width direction of the object being conveyed to detect light reflected by the object by the plurality of light receiving elements,

wherein

the illumination part (22) includes a light leading member (22C) extending in width direction of the conveying path (17) and light emitting members (22A, 22B) disposed at both ends of the light leading member (22C) to make light enter the light leading member (22C),

and the reflected image reading unit comprises reflecting plates (31, 32) disposed at both ends of the light leading member (22C) in opposing relationship with the light leading member (22C),

a memory part (27) to store therein a first reference pattern of light amount distribution of the line-shaped illumination light emitted by the light leading member (22C) in a first state that the light emitting member (22A) disposed at one end of the light leading member (22C) is turned on and the light emitting member (22B) disposed at the other end thereof is turned off and a second reference pattern of light amount distribution of the line-shaped illumination light emitted by the light leading member (22C) in a second state that the light emitting member (22A) disposed at one end of the light leading member (22C) is turned off and the light emitting member (22B) disposed at the other end thereof is turned on,

**characterized in that**

a correction coefficient calculation part is provided to detect reflected light of each of the reflecting plates (31, 32) disposed in opposing relationship with both ends of the light leading member (22C) in a third state that the light emitting members (22A, 22B) disposed at both ends of the light leading member (22C) are both turned on by the light receiving part (24) and to calculate correction coefficient used in reading of reflected image of the object on the basis of amount of reflected light detected for each of the reflecting plates (31, 32) and the first and second reference patterns stored in the memory part (27).

2. A reflected image reading unit according to Claim 1, wherein

the correction coefficient calculation part calculates degree of reduction in light amount of each of the light emitting members (22A, 22B) as the correction coefficient.

3. A reflected image reading unit according to Claim 1 or 2, wherein

the memory part (27) stores therein the amount of reflected light detected by the light receiving part (24) of each of the reflecting plates (31, 32) in respective states as the first and second reference patterns.

**Patentansprüche**

1. Leseeinheit für ein reflektiertes Bild, die ein Beleuchtungsteil (22) und ein Lichtempfangsteil (24), das auf einer Seite gegenüber einem zu lesenden Objekt, das längs eines Transportpfads (17) transportiert wird, angeordnet ist, umfasst,

wobei das Beleuchtungsteil (22) das Objekt, das transportiert wird, mit Beleuchtungslicht in Form einer Linie in Breitenrichtung des Objekts bestrahlt,

wobei das Lichtempfangsteil (24) mehrere Lichtempfangselemente umfasst, die in Breitenrichtung des Objekts, das transportiert wird, angeordnet sind, um durch die mehreren Lichtempfangselemente Licht zu detektieren, das durch das Objekt reflektiert wird,

wobei

das Beleuchtungsteil (22) ein Lichtleitelement (22C), das sich in Breitenrichtung des Transportpfads (17) erstreckt, und Lichtausstrahlungselemente (22A, 22B), die an beiden Enden des Lichtleitelements (22C) angeordnet sind, damit Licht in das Lichtleitelement (22C) eintritt, umfasst,

und wobei die Leseeinheit für ein reflektiertes Bild Folgendes umfasst:

reflektierende Platten (31, 32), die an beiden Enden des Lichtleitelements (22C) gegenüber dem Lichtleitelement (22C) angeordnet sind,

ein Speicherteil (27), um darin ein erstes Referenzmuster einer Lichtmengenverteilung des linienförmigen Beleuchtungslichts, das durch das Lichtleitelement (22C) ausgestrahlt wird, in einem ersten Zustand, in dem das Lichtausstrahlungselement (22A), das an einem Ende des Lichtleitelements (22C) angeordnet ist, eingeschaltet ist und das Lichtausstrahlungselement (22B), das an dem anderen Ende angeordnet ist, ausgeschaltet ist, und ein zweites Referenzmuster einer Lichtmengenverteilung des linienförmigen Beleuchtungslichts, das durch das Lichtleitelement (22C) ausgestrahlt wird, in einem zweiten Zustand, in dem das Lichtausstrahlungselement (22A), das an einem Ende des Lichtleitelements (22C) angeordnet ist, ausgeschaltet ist und das Lichtausstrahlungselement (22B), das an dem anderen Ende angeordnet ist, eingeschaltet ist, zu speichern,

**dadurch gekennzeichnet, dass**

ein Teil zur Berechnung eines Korrekturkoeffizienten bereitgestellt ist, um reflektiertes Licht von jeder der reflektierenden Platten (31, 32), die in Bezug auf beide Enden des Lichtleitelements (22C) gegenüberliegend angeordnet sind, in einem dritten Zustand, in dem die beiden Lichtausstrahlungselemente (22A, 22B), die an beiden Enden des Lichtleitelements (22C) angeordnet sind, durch das Lichtempfangsteil (24) eingeschaltet sind, zu detektieren, und um auf der Basis einer Menge des reflektierten Lichts, das für jede der reflektierenden Platten (31, 32) detektiert wird, und des ersten und des zweiten Referenzmusters, die in dem Speicherteil (27) gespeichert sind, einen Korrekturkoeffizienten zu berechnen, der beim Lesen eines reflektierten Bilds des Objekts verwendet wird.

**2.** Leseeinheit für ein reflektiertes Bild nach Anspruch 1, wobei
das Teil zum Berechnen des Korrekturkoeffizienten einen Grad einer Verringerung der Lichtmenge von jedem der Lichtausstrahlungselemente (22A, 22B) als den Korrekturkoeffizienten verwendet.

**3.** Leseeinheit für ein reflektiertes Bild nach Anspruch 1 oder 2, wobei
das Speicherteil (27) die Menge an reflektiertem Licht, die durch das Lichtempfangsbauteil (24) von jeder der reflektierenden Platten (31, 32) in den jeweiligen Zuständen detektiert wird, als das erste und das zweite Referenzmuster speichert.

## Revendications

**1.** Unité de lecture d'image reflétée incluant une partie d'illumination (22) et une partie de réception de lumière (24) disposée sur un côté opposé à un objet à lire qui est convoyé le long d'un trajet de convoyage (17),
la partie d'illumination (22) éclairant l'objet qui est convoyé avec une lumière d'illumination sous la forme d'une ligne dans la direction en largeur de l'objet,
la partie de réception de lumière (24) incluant une pluralité d'éléments récepteurs de lumière agencés dans la direction en largeur de l'objet qui est convoyé afin de détecter la lumière réfléchie par l'objet par la pluralité d'éléments récepteurs de lumière,
dans laquelle
la partie d'illumination (22) inclut un élément conducteur de lumière (22C) s'étendant dans la direction en largeur du trajet de convoyage (17) et des éléments émetteurs de lumière (22A, 22B) disposés aux deux extrémités de l'élément conducteur de lumière (22C) pour amener la lumière à entrer dans l'élément conducteur de lumière (22C),
et l'unité de lecture d'image reflétée comprend des plaques réfléchissantes (31, 32) disposées aux deux extrémités de l'élément conducteur de lumière (22C) en relation d'opposition avec l'élément conducteur de lumière (22C),
une partie formant mémoire (27) pour stocker à l'intérieur un premier motif de référence de distribution quantitative de la lumière d'illumination en forme de ligne émise par l'élément conducteur de lumière (22C) dans un premier état tel que l'élément émetteur de lumière (22A) disposé à une extrémité de l'élément conducteur de lumière (22C) est mis en marche et l'élément émetteur de lumière (22B) disposé à l'autre extrémité de celui-ci est arrêté, et un second motif de référence de distribution quantitative de la lumière d'illumination en forme de ligne émise par l'élément conducteur de lumière (22C) dans un second état tel que l'élément émetteur de lumière (22A) disposé à une extrémité de l'élément conducteur de lumière (22C) est arrêté et l'élément émetteur de lumière (22B) disposé à l'autre extrémité de celui-ci est mis en marche,
**caractérisée en ce que**
il est prévu une partie de calcul de coefficient de correction pour détecter la lumière réfléchie de chacune des plaques réfléchissantes (31, 32) disposées en relation d'opposition avec les deux extrémités de l'élément conducteur de lumière (22C) dans un troisième état tel que les éléments émetteurs de lumière (22A, 22B) disposés aux deux extrémités de l'élément conducteur de lumière (22C) sont tous deux mis en marche par la partie de réception de lumière (24) et pour calculer un coefficient de correction utilisé à la lecture de l'image reflétée de l'objet sur la base de la quantité de lumière réfléchie détectée pour chacune des plaques réfléchissantes (31, 32) et du premier et du second motif de référence stockés dans la partie formant mémoire (27).

**2.** Unité de lecture d'image réfléchie selon la revendication 1, dans laquelle
la partie de calcul de coefficient de correction calcule un degré de réduction de la quantité de lumière de chacun des éléments émetteurs de lumière (22A, 22B) à titre de coefficient de correction.

**3.** Unité de lecture d'images réfléchies selon la revendication 1 ou 2, dans laquelle
la partie formant mémoire (27) stocke à l'intérieur la quantité de lumière réfléchie détectée par la partie de réception de lumière (24) de chacune des plaques réfléchissantes (31, 32) dans des états respectifs à titre de premier et de second motif de référence.

# FIG. 1

# FIG. 2

1 : ATM

- 3 DISPLAY AND OPERATION UNIT
- 4 BILL PROCESSING UNIT
- 5 COIN PROCESSING UNIT

2 MAIN CONTROL UNIT

- 6 CARD AND DETAILED STATEMENT PROCESSING UNIT
- 7 BANKBOOK PROCESSING UNIT
- 8 BIOMETRIC INFORMATION READING UNIT
- 9 COMMUNICATION UNIT

EP 2 334 048 B1

# FIG. 3

4 : BILL PROCESSING UNIT

FIG. 4

20 : BILL DISTINGUISHING UNIT

28 INPUT/OUTPUT PART

26 DISTINGUISHING PART

21 CONTROL PART

27 MEMORY PART

25 DETECTION PART

23 LIGHTING PART

24 LIGHT RECEIVING PART

22 ILLUMINATION PART

# FIG. 5

SUB-SCANNING DIRECTION

BILL

22C
23
31
22A
17

A
A

# FIG. 6

MAIN SCANNING DIRECTION

B
22A
22C
22B
31
32
17
B
BILL

# FIG. 7

L0(X)

X=M                                                X=N

# FIG. 8

R0(X)

X=M                                                X=N

# FIG. 9

# FIG. 10

# FIG. 11

# FIG. 12

**EP 2 334 048 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009118142 A

- US 20090116080 A1